# EUROPÄISCHE PATENTSCHRIFT

(11) **EP 1 073 174 B1**
(45) Veröffentlichungstag und Bekanntmachung des Hinweises auf die Patenterteilung: **13.10.2004**
(21) Anmeldenummer: 00112475.9
(22) Anmeldetag: 10.06.2000
(51) Int. Cl.: H02H 5/04, H02H 7/08

(54) **Elektromotor mit Selbstschutzeinrichtung gegen Überhitzung**
Electrical motor with self-protection against overheating
Moteur électrique comprenant une auto-protection contre la surchauffe

(30) Priorität: 28.07.1999 DE 29913196 U
(43) Veröffentlichungstag der Anmeldung: 31.01.2001
(73) Patentinhaber: ebm-papst Mulfingen GmbH & Co.KG, 74673 Mulfingen (DE)
(72) Erfinder: Wagner, Martin Ing., 74653 Ingelfingen (DE); Bertolini, Thomas Dr.-Ing-, 77866 Rheinau (DE)
(74) Vertreter: Patentanwälte Dr. Solf & Zapf

(56) Entgegenhaltungen:
- US-A- 5 158 436
- US-A- 5 877 604

## Beschreibung

Die vorliegende Erfindung betrifft einen Elektromotor mit einer Motorwicklung, einem Rotor mit einem Lagersystem und einer elektronischen Steuerung für die Motorwicklung sowie mit einer Selbstschutzeinrichtung gegen Überhitzung, entsprechend dem Oberbegriff des Patentanspruchs 1.

Bei Elektromotoren kann es durch Überlastungen, unsachgemäßen Gebrauch, Blockierung, aber auch durch Alterungs- bzw. Verschleißerscheinungen, zu Überhitzungen kommen, die sich nachteilig auf die Lebensdauer auswirken. Im allgemeinen reduziert sich die Lebensdauer eines Motors durch zu hohe Temperaturen der Motorwicklung (kann Windungsschluss verursachen) und/oder durch zu hohe Temperaturen im Bereich der elektronischen Steuerung. Außerdem besteht bei einer Überhitzung auch eine gewisse Brandgefahr. Es ist deshalb bekannt, aus Sicherheitsgründen den Motor im Falle einer Überhitzung ganz abzuschalten. Wechseistrommotoren werden dazu hauptsächlich durch sogenannte Temperaturwächter, durch Heißleiter mit Auslösegerät oder auch Motorschutzschalter überwacht. Bei Gleichstrommotoren mit interner oder externer elektronischer Steuerung wird diese Überwachung durch einen sogenannten Blockierschutz realisiert, wobei es sich um eine elektronische Schaltungskompenente der Steuerung handelt, die im Blockierfall den Motor in der Regel ganz abschaltet. Ein solches Abschalten ist aber bei sicherheitsrelevanten Antrieben in der Regel nicht akzeptabel.

Das nächstkommende, dem Oberbegriff des Anspruchs 1 entsprechende Dokument US-A-5 158 436 beschreibt einen Elektromotor zum Antrieb einer Pumpe, wobei diverse Temperatur-Sensoren über einen Steuer- und Regelkreis zur Erkennung einer Überlastung vorgesehen sind. Als einzige Maßnahme bei Erfassung einer Überlastung ist in diesem Dokument eine Reduzierung der Motordrehzahl beschrieben.

Das Dokument US-A-5 877 604 beschreibt eine Überwachungsanordnung, die ohne spezielle Temperatursensoren den Motorstrom bzw. die Motorspannung überwacht. Bei Abweichungen von einem Sollwert wird ein Überfastsignal erzeugt. Dies kann zu einem Warnsignal führen oder sonstigen Maßnahmen, beispielsweise zu einer Änderung des Sollwertes oder zu einer Beeinflussung eines Reglers. Der Elektromotor treibt einen Ventilator an, der einen ersten Luftstrom in Richtung des Elektromotors und einen zweiten Luftstrom in Richtung eines Kühlkörpers einer Endstufe abgibt.

Der vorliegenden Erfindung liegt die Aufgabe zugrunde, einen Motor mit hoher Lebensdauer zu schaffen, der sich speziell für sicherheitsrelevante Lüfter-Antriebe eignet.

Erfindungsgemäß wird diese Aufgabe durch die Merkmale des Patentanspruchs 1 gelöst. Vorteilhafte Ausgestaltungen der Erfindung ergeben sich aus den abhängigen Ansprüchen.

Durch die Erfindung wird der Vorteil erreicht, dass im Falle einer Überhitzung, die beispielsweise durch unsachgemäße Einsatzbedingungen, wie zu hohes Drehmoment, schwergängiges Lagersystem, Windungsschluss, verursacht wird, der Motor nicht abschaltet, sondern ein weiterer Betrieb mit verringerter Leistung aufrechterhalten wird. Erst dann, wenn der jeweilige Istwert aus bestimmten Gründen nicht mehr auf den zugehörigen Grenzwert nachgeregelt werden kann, wenn also die Temperatur an Bauteilen des Motors auch bei weiterer Reduzierung der Motorleistung weiter ansteigt bzw. die vorgegebenen Grenzwerte dauerhaft überschreitet, erfolgt eine gänzliche Abschaltung des Motors. Erfindungsgemäß wird der Einfluß einer zu hohen Umgebungstemperatur innerhalb eines zu kühlenden Systems dadurch reduziert, dass der Volumenstrom erhöht wird, so dass die Umgebungstemperatur reduziert wird und damit eine Abkühlung des Motors erfolgt. Somit kann in den meisten Fällen ein Betrieb des Motors aufrechterhalten werden, so dass der erfindungsgemäße selbstschützende Motor sich besonders für sicherheitrelevante Antriebsfunktionen eignet.

Anhand der Zeichnung soll die Erfindung beispielhaft genauer erläutert werden. Dabei zeigen:
- Fig. 1: ein prinzipielles Blockschaltbild eines erfindungsgemäßen Elektromotors und
- Fig. 2: ein Kennliniendiagramm zur Erläuterung der Wirkungsweise der Erfindung.

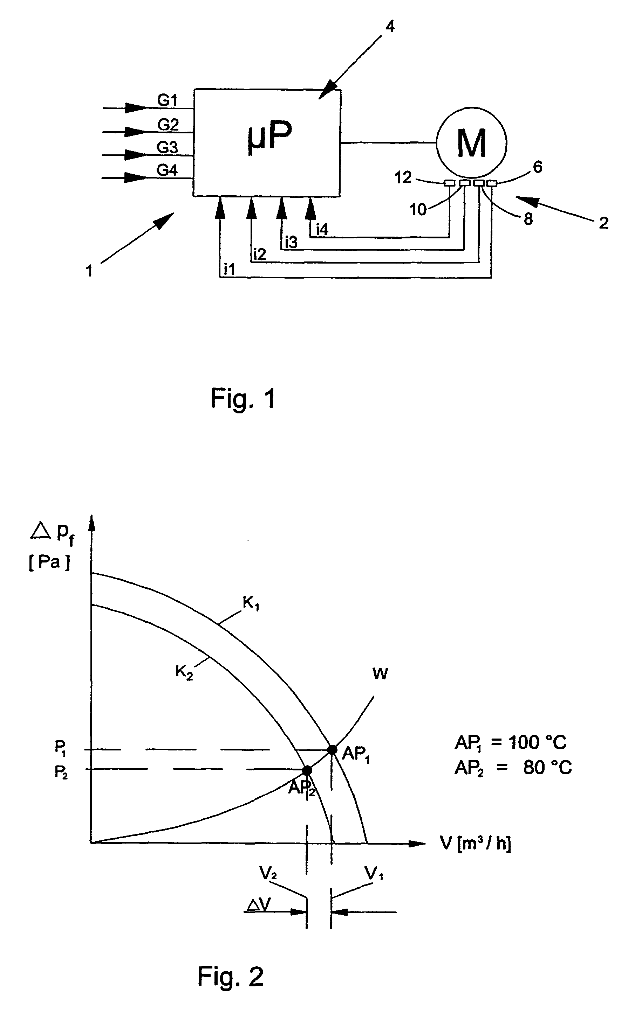

In Fig. 1 ist ein Elektromotor M stark vereinfacht dargestellt. Er besteht aus folgenden, nicht näher bezeichneten Komponenten: einem Stator mit einer Motorwicklung, einem Rotor, der über ein Lagersystem drehbar mit dem Stator verbunden ist, sowie elektronischen Bauelementen zur Steuerung der Motorwicklung.

Weiterhin weist der Motor M eine Selbstschutzeinrichtung 1 auf, die aus einer Sensoreinrichtung 2 sowie einer Regeleinheit 4 besteht. Die Sensoreinrichtung 2 besteht im dargestellten, bevorzugten Ausführungsbeispiel aus vier Temperatursensoren, und zwar einem dem Lagersystem zugeordneten Lagersensor 6, einem der Wicklung zugeordneten Wicklungssensor 8, einem den elektronischen Bauteilen zugeordneten Elektroniksensor 10 sowie einem der Motorumgebung zugeordneten Umgebungssensor 12. Jeder Sensor 6 bis 12 ist über eine Signalverbindung mit einem Eingang der Regeleinheit 4 verbunden, um dieser die jeweiligen Sensorsignale als Temperatur-Istwerte i1, i2, i3, i4 zuzuführen. Die Regeleinheit 4 weist zudem entsprechende Eingänge zur Eingabe von zugehörigen, insbesondere frei einstellbaren Temperatur-Grenzwerten G1, G2, G3, G4 auf. Zweckmäßigerweise besteht die Regeleinheit 4 aus einem Mikroprozessor µP, der im Falle eines Elektronikmotors auch die Kommutierung des Motorstromes auf die entsprechenden Motorwicklungen übernimmt.

Die Regeleinheit 4 vergleicht den jeweiligen Temperatur-Istwert mit dem zugehörigen Grenzwert. Wenn mindestens einer der Istwerte den zugehörigen Grenzwert überschreitet, veranlasst die Regeleinheit eine Ansteuerung der Motorwicklung derart, daß durch Änderung der elektrischen Leistung, d. h. des Stromes und/oder der Spannung, bzw. durch Änderung der Motor-Drehzahl der Istwert wieder unter den oder maximal auf den Grenzwert eingeregelt wird. Dies bedeutet, daß sich der Motor praktisch selbst vor Übertemperatur in den jeweiligen gefährdeten Bereichen schützt. Dabei wird aber in den meisten Fällen ein weitergehender Betrieb des Motors aufrechterhalten. Eine gänzliche Abschaltung erfolgt erst dann, wenn der jeweilige Istwert nicht mehr auf den zugehörigen Grenzwert nachgeregelt werden kann, d. h. wenn mindestens ein Istwert den zugehörigen Grenzwert über eine vorbestimmte Zeitdauer hinweg überschreitet. Nach einem Abschalten kann aber auch ein automatisches Wiedereinschalten möglich sein.

Die Erfindung ist speziell zum Einsatz bei Lüftermotoren vorgesehen, wobei der Rotor ein Lüfterrad antreibt. Dabei ist der Umgebungssensor 12 im Bereich eines vom Lüfterrad erzeugten Volumenstromes angeordnet. Damit lassen sich vorteilhafterweise auch Fälle erfassen, in denen nicht der Motor selbst die Ursache einer Temperaturerhöhung ist, sondern die Umgebungstemperatur. Besonders im Falle eines Lüfters hat die Umgebungstemperatur einen wesentlichen Einfluß auf die Temperatur des Motors, weil das jeweils geförderte Medium bzw. der Volumenstrom den Motor umströmt. Dabei wird im Falle einer Grenzwertüberschreitung des Umgebungssensors durch die Regeleinheit 4 die Drehzahl des Motors so geändert, daß eine Erhöhung des Volumenstromes und dadurch eine Abkühlung des Motors erfolgt. Somit läßt sich ein Lüfter aus einem unzulässigen Arbeitsbereich, bei dem er einer erhöhten Temperatur ausgesetzt ist, herausregeln.

Die Erfindung ist auch besonders geeignet zum Einsatz bei Ventilatormotoren, wenn der Ventilator in einem unzulässigen Arbeitsbereich betrieben wird.

Ein unzulässiger Arbeitsbereich liegt beispielsweise bei einem Radialventilator mit vorwärts gekrümmten Schaufeln dann vor, wenn er freiblasend, d. h. ohne ausreichenden Gegendruck, betrieben wird. Dies kann zu einer unerlaubten reduzierten Drehzahl des Ventilators führen, bei der er sich unzulässig erwärmt. Allgemein nimmt die Drehzahl des vorwärtsgekrümmten Radialventilators mit zunehmendem Gegendruck zu, wodurch sich die Stromaufnahme verringert und die Motortemperatur abnimmt.

Bei Axialventilatoren sind die Verhältnisse genau umgekehrt. Hier hat der Ventilator im freiblasenden Betrieb die höchste Drehzahl. Mit zunehmendem Gegendruck nimmt die Drehzahl ab und die Stromaufnahme nimmt zu. Dies führt zu einer höheren Erwärmung. Deshalb ist bei Axialventilatoren darauf zu achten, daß der Gegendruck einen gewissen Maximaldruck nicht überschreitet. Mittels der vorliegenden Erfindung kann auch der Betrieb eines Ventilators in den nicht erlaubten Bereichen vorteilhafterweise verhindert werden.

Dies ist in Fig. 2 beispielhaft für einen Radialventilator veranschaulicht, wobei sich aber für einen Axialventilator prinzipiell eine ähnliche Arbeitsweise ergibt. Lediglich der Verlauf der Ventilatorkurve wäre etwas anders. Das Gerät, in das der Ventilator eingebaut ist, hat eine Widerstandskennlinie W. Es stellt sich nun auf der Ventilatorkennlinie K₁ ein bestimmter Arbeitspunkt AP₁ des Ventilators ein mit einem Druck P₁ und einem Volumenstrom V₁. Während des Betriebs stellt sich nun heraus, daß der Motor an diesem Arbeitspunkt zu stark belastet wird, was durch einen entsprechenden Temperaturanstieg selbsttätig festgestellt wird, beispielsweise auf 100° C. Würde der Motor in diesem Arbeitspunkt längere Zeit betrieben, so hätte dies Auswirkungen auf seine Lebensdauer. Durch die erfindungsgemäßen Maßnahmen wird die erhöhte unzulässige Betriebstemperatur erfaßt und in der Regeleinheit 4 mit dem jeweils vorgegebenen, gespeicherten Grenzwert, der beispielsweise auf 80° C eingestellt ist, verglichen. Die Regeleinheit 4 veranlasst eine Reduzierung beispielsweise der Motorspannung, was auch zu einer Reduzierung des Motorstromes und damit zu einer verringerten Erwärmung führt. Der Arbeitspunkt des Ventilators wandert dabei auf der Widerstandkennlinie W nach unten. Wird der Grenzwert von beispielsweise 80° C erreicht, arbeitet der Ventilator im Arbeitspunkt AP₂, dem neuen Schnittpunkt von Ventilatorkennlinie K₂ mit Widerstandskennlinie W. Der Volumenstrom hat sich dabei von V₁ auf V₂ reduziert bei gleichzeitiger Abnahme des Druckes von P₁ auf P₂.

Aus der obigen Beschreibung wird deutlich, daß sich der Motor bezüglich zu hoher Temperaturen selbst schützt, so daß hohe Lebensdauerwerte gewährleistet sind. Der Schutz besteht zunächst nicht in einer Abschaltung, sondern in einer Reduzierung der zugeführten Leistung. Dadurch kann in der Regel die jeweilige Temperatur im Bereich des Lagersystems, der Wicklung und der Elektronik eingehalten werden, was sich positiv auf die Lebensdauer auswirkt.

## Patentansprüche

1. Elektromotor (M) mit einer Motorwicklung, einem Rotor mit einem Lagersystem und einer elektronischen Steuerung für die Motorwicklung sowie mit einer Selbstschutzeinrichtung (1) mit einer Sensoreinrichtung (2) zum Erfassen der Temperatur im Motor - und Umgebungsbereich sowie mit einer mit der Sensoreinrichtung (2) und der Steuerung verbundenen Regeleinheit (4), wobei die Regeleinheit (4) jeweils mindestens ein Sensorsignal als Temperatur-Istwert (i1, i2, i3, i4) mit einem vorgegebenen zugehörigen Grenzwert (G1, G2, G3, G4) vergleicht und im Falle einer Überschreitung mindestens eines Grenzwertes über die Steuerung die Motorwicklung derart angesteuert wird, dass durch Änderung der elektrischen Leistung bzw. der Motor-Drehzahl der Istwert wieder unter oder maximal auf den Grenzwert eingeregelt wird, wobei die Sensoreinrichtung (2) einen die Temperatur der Motorumgebung erfassenden Umgebungssensor (12) aufweist,
**dadurch gekennzeichnet, dass** der Rotor ein Lüfterrad antreibt und der Umgebungssensor (12) im Bereich eines vom Lüfterrad erzeugten Volumenstromes angeordnet ist, wobei die Regeleinheit (4) im Falle einer Überschreitung des von dem Umgebungssensor (12) erfassten Istwertes über den zugehörigen Grenzwert über die Steuerung die Motorwicklung zur Veränderung der Drehzahl zum Zwecke einer Erhöhung des Volumenstromes und dadurch einer Abkühlung des Motors (M) ansteuert.

2. Elektromotor nach Anspruch 1,
**dadurch gekennzeichnet, dass** die Sensoreinrichtung (2) zusätzlich einen die Temperatur der Motorwicklung erfassenden Wicklungssensor (6), einen die Temperatur des Lagersystems erfassenden Lagersensor (8) und/oder einen die Temperatur der Steuerung erfassenden Elektroniksensor (10) aufweist, wobei die jeweiligen Sensorsignale als Temperatur-Istwerte (i1, i2, i3, i4) mit jeweils einem zugehörigen vorgegebenen Grenzwert (G1, G2, G3, G4) verglichen werden.

3. Elektromotor nach Anspruch 1 oder 2,
**dadurch gekennzeichnet, dass** die Regeleinheit (4) derart ausgelegt ist, dass im Falle einer über eine vorbestimmte Zeitdauer fortdauemden Überschreitung mindestens eines der Istwerte über den zugehörigen Grenzwert die Wicklungs-Leistung bzw. Drehzahl weitergehend verändert und/oder nachfolgend die Wicklung ganz abgeschaltet wird.

4. Elektromotor nach einem der Ansprüche 1 bis 3,
**dadurch gekennzeichnet, dass** die Regeleinheit (4) hauptsächlich aus einem Mikroprozessor (µP) besteht.

## Claims

1. Electric motor (M) having a motor winding, a rotor with a bearing system and having an electronic controller for the motor winder, as well as having a self-protection device (1) with a sensor device (2) for detection of the temperature in the motor area and in the surrounding area, as well as having a regulation unit (4) which is connected to the sensor device (2) and to the controller, with the regulation unit (4) in each case comparing at least one sensor signal as an actual temperature value (I1, I2, I3, I4) with a predetermined associated limit value (G1, G2, G3, G4) and, if at least one limit value is exceeded, the motor winding is driven via the controller such that the actual value is once again regulated below or at a maximum at the limit value by changing the electrical power and/or the motor rotation speed, with the sensor device (2) having an environment sensor (12) which detects the temperature of the motor environment,
**characterized in that** the rotor drives a fan impeller, and the environment sensor (12) is arranged in the area of a volume flow which is produced by the fan impeller, with the regulation unit (4) driving the motor winding, via the controller, in order to vary the rotation speed, in order to increase the volume flow thus to cool the motor (M), if it is found that the actual value, as detected by the environment sensor (12), is above the associated limit value.

2. Electric motor according to Claim 1,
**characterized in that** the sensor device (2) additionally has a winding sensor (6) which detects the temperature of the motor winding, a bearing sensor (8) which detects the temperature of the bearing system, and/or an electronic sensor (10) which detects the temperature of the controller, with the respective sensor signals being compared as actual temperature values (I1, I2, I3, I4) with a respectively associated, predetermined limit value (G1, G2, G3, G4).

3. Electric motor according to Claim 1 or 2,
**characterized in that** the regulation unit (4) is designed such that the winding power and/or the rotation speed are/is changed to a greater extent, and/or the winding is subsequently switched off completely, if at least one of the actual values exceeds the associated limit value continuously for a predetermined time period.

4. Electric motor according to one of Claims 1 to 3,
**characterized in that** the regulation unit (4) mainly consists of a microprocessor (µP).

## Revendications

1. Moteur électrique (M) doté d'un bobinage de moteur, d'un rotor avec un système de palier et d'une commande électronique de bobinage de moteur ainsi que d'un dispositif d'autoprotection (1) avec un dispositif de détection (2) pour détecter la température du moteur - et de la zone environnante ainsi que d'une unité de réglage (4) reliée à la commande et au dispositif de détection (2), sachant que l'unité de réglage (4) compare respectivement au moins un signal de détecteur, en tant que valeur réelle de la température (il, i2, i3, i4), à une valeur limite (G1, G2, G3, G4) associée prédéterminée et dans le cas d'un dépassement d'au moins une valeur limite, le bobinage de moteur est commandé via la commande de sorte que la valeur réelle soit de nouveau ramenée, en faisant varier la puissance électrique et/ou le nombre de tours du moteur, en dessous de la valeur limite ou tout au plus à la valeur limite, sachant que le dispositif de détection (2) présente un détecteur ambiant (12) détectant la température de l'environnement du moteur, **caractérisé en ce que** le rotor actionne un pignon de ventilateur et que le détecteur ambiant (12) est disposé à proximité d'un courant volumique produit par le pignon de ventilateur, sachant que l'unité de réglage (4) commande le bobinage du moteur via la commande, dans le cas d'un dépassement de la valeur réelle détectée par le détecteur ambiant (12) au-delà de la valeur limite associée, pour modifier le nombre de tours afin d'augmenter le courant volumique et donc de commander un refroidissement du moteur (M).

2. Moteur électrique selon la revendication 1, **caractérisé en ce que** le dispositif de détection (2) présente en outre un détecteur de bobinage (6) détectant la température du bobinage de moteur, un détecteur de palier (8) détectant la température du système de palier et/ou un détecteur d'électronique (10) détectant la température de la commande, sachant que les signaux de détection respectifs sont comparés en tant que valeurs réelles de température (i1, i2, i3, i4) à la valeur limite (G1, G2, G3, G4) prédéterminée associée.

3. Moteur électrique selon l'une quelconque des revendications 1 ou 2, **caractérisé en ce que** l'unité de réglage (4) est agencée de sorte qu'en cas de dépassement d'une durée prédéterminée d'au moins une des valeurs réelles, la puissance du bobinage et/ou le nombre de tours soient d'avantage modifiés en fonction de la valeur limite associée et/ou que le bobinage soit complètement déconnecté.

4. Moteur électrique selon l'une quelconque des revendications 1 à 3, **caractérisé en ce que** l'unité de réglage (4) consiste principalement en un microprocesseur (µP).
